# FASCICULE DE BREVET EUROPEEN

(11) **EP 3 854 680 B1**
(45) Date de publication et mention de la délivrance du brevet: **03.01.2024**
(21) Numéro de dépôt: 20207825.9
(22) Date de dépôt: 16.11.2020
(51) Int. Cl.: B64C 27/12, B64D 27/02, B64C 27/14, B64D 35/08, B64C 27/00, B64D 31/14, B64D 27/24

(54) **AÉRONEF À VOILURE TOURNANTE MUNI D'UN SYSTÈME DE TRANSMISSION ÉQUIPÉ D'UN MOTEUR ÉLECTRIQUE DE SECOURS**
DREHFLÜGELFLUGZEUG MIT EINEM ÜBERTRAGUNGSSYSTEM, DAS MIT EINEM ELEKTRISCHEN NOTANTRIEBSMOTOR AUSGESTATTET IST
ROTARY-WING AIRCRAFT PROVIDED WITH A TRANSMISSION SYSTEM EQUIPPED WITH A SPARE ELECTRIC MOTOR

(30) Priorité: 23.01.2020 FR 2000635
(43) Date de publication de la demande: 28.07.2021
(73) Titulaire: Airbus Helicopters, 13725 Marignane Cedex (FR)
(72) Inventeur: MERCIER, Christian, 13580 La Fare Les Oliviers (FR); LAPEYRE, Jean-Victor, 13680 Lançon-Provence (FR); GAZZINO, Marc, 13012 Marseille (FR)
(74) Mandataire: GPI Brevets

(56) Documents cités:
- EP-A1- 2 735 507
- EP-A1- 2 735 508
- EP-A1- 2 974 964
- EP-A1- 3 434 587

## Description

La présente invention concerne un aéronef à voilure tournante comportant au moins un moteur thermique muni d'un système de transmission équipé d'un moteur électrique de secours.

Un aéronef à voilure tournante est classiquement pourvu d'au moins un rotor principal pour assurer sa sustentation voire sa propulsion et généralement d'un système de contrôle du mouvement en lacet. Un tel système de contrôle du mouvement en lacet peut par exemple comprendre un rotor auxiliaire situé à l'arrière de l'aéronef.

Afin d'entraîner en rotation le rotor principal et le cas échéant le rotor arrière, l'aéronef comporte une installation motrice qui peut comporter un ou plusieurs moteurs thermiques.

Ainsi, un aéronef comporte un ou plusieurs moteurs thermiques pour mettre en mouvement le rotor principal et le rotor arrière via au moins une boîte de transmission de puissance.

L'expression « moteur thermique » désigne les turbomoteurs ou encore l'ensemble des moteurs à combustion interne notamment à pistons pouvant être utilisés dans une telle installation motrice. L'expression « moteur thermique » est à opposer à l'expression « moteur électrique » qualifiant les moteurs consommant uniquement de l'énergie électrique.

Ainsi, un aéronef comporte au moins un moteur thermique mettant en mouvement au moins le rotor principal via au moins une boîte de transmission de puissance principale.

Une boîte de transmission de puissance principale comporte ainsi un arbre d'entrée de puissance relié mécaniquement par une liaison mécanique d'entrée de puissance au moteur thermique. De plus, la boîte de transmission de puissance principale comporte au moins une sortie principale de puissance reliée à un mât rotor du rotor principal. Eventuellement, la boîte de transmission de puissance principale comporte une sortie arrière de puissance reliée à un rotor arrière par une liaison mécanique arrière, cette liaison mécanique arrière pouvant comprendre au moins un arbre et/ou une boîte de transmission de puissance arrière.

Par ailleurs, le pas des pales du rotor principal peut être contrôlé par des chaines de commande de vol munies de servocommandes hydrauliques. Dès lors, la boîte de transmission de puissance principale peut comprendre au moins un arbre secondaire de sortie mettant en mouvement une pompe hydraulique d'un circuit hydraulique alimentant en fluide les servocommandes.

Ainsi, lors d'une phase de fonctionnement normal, le ou les moteurs thermiques mettent en mouvement les divers organes mobiles de la boîte de transmission de puissance principale. Par suite, la boîte de transmission de puissance principale entraîne la rotation du rotor principal, la mise en mouvement de la pompe hydraulique du système de commande de vol voire la rotation du rotor arrière.

En cas d'arrêt d'un moteur thermique suite à une panne, le rotor principal peut ne plus être entraîné en rotation par l'installation motrice. Le pilote manoeuvre alors les commandes de vol pour placer l'aéronef dans une phase de vol en autorotation.

Une phase de vol en autorotation correspond à une phase de vol particulière dans laquelle l'aéronef vole en descente sans puissance motrice. Dans ce cas, la rotation du rotor principal est engendrée par le flux d'air traversant le rotor principal ce qui permet à l'aéronef de rester manoeuvrable. La phase de vol en autorotation permet d'atterrir en sécurité.

Toutefois, cette entrée en phase de vol en autorotation doit être faite dans un délai très court, de l'ordre de 1 à 2 secondes après l'apparition de la panne d'un moteur thermique et selon une procédure particulière visant à maintenir le rotor à une vitesse de rotation prédéterminée. Sans action rapide du pilote, la vitesse de rotation du rotor principal de l'aéronef décroit très rapidement jusqu'au décrochage de ce rotor principal. La phase de vol en autorotation doit alors faire l'objet d'exercices d'entraînement récurrents du pilote. Pour cette raison, le domaine de vol d'un aéronef peut être réduit.

Une solution envisagée pour améliorer à ce titre les performances des aéronefs est l'utilisation d'une installation motrice « hybride ». Une telle installation motrice « hybride » comprend au moins un moteur électrique ou une machine électrique pour mettre en mouvement la boîte de transmission de puissance principale via une entrée usuelle de puissance ou une entrée de puissance dédiée.

Le document FR2952907 décrit une installation motrice hybride mise en oeuvre sur un aéronef comportant un unique moteur thermique. L'aéronef comprend ainsi un premier moteur électrique lié mécaniquement à une entrée d'une boîte de transmission de puissance entraînant en rotation le rotor principal de l'aéronef et un second moteur électrique lié mécaniquement à son rotor arrière. Ces moteurs électriques peuvent fonctionner en mode moteur pour entraîner les rotors ou en mode générateur électrique pour transformer une énergie mécanique en une énergie électrique ainsi que pour servir de ralentisseur des rotors ou bien d'un moteur thermique.

Le document FR2962404 décrit l'architecture électrique d'une installation motrice hybride d'un aéronef à voilure tournante. Cette installation motrice comporte au moins un moteur thermique et au moins un moteur électrique ainsi qu'un réseau électrique principal et un réseau électrique auxiliaire.

Le document US 9045223 décrit un aéronef à voilure tournante comportant un unique moteur thermique, au moins une machine électrique et une boîte de transmission principale de puissance. Par exemple, la machine électrique peut être liée à la boîte de transmission principale de puissance, au moteur thermique ou bien directement au rotor principal de l'aéronef. L'aéronef comporte un moyen de surveillance pour surveiller un paramètre de surveillance afin de détecter une éventuelle panne du moteur thermique. Dès lors, un moyen de commande est en communication avec le moyen de surveillance pour commander la machine électrique en cas de panne du moteur thermique.

En particulier, selon le document US 9045223 et après détection de cette panne, la machine électrique peut être sollicitée pour fonctionner en mode moteur afin de fournir une puissance mécanique auxiliaire au rotor principal pour le maintenir à une vitesse de rotation autorisant l'initiation d'une phase de vol en autorotation. Cette fourniture de puissance auxiliaire permet de réduire la décélération du rotor principal pour offrir au pilote une plus grande souplesse dans la manoeuvre. L'entrée en phase de vol en autorotation de l'aéronef est alors plus rapide et/ou aisée pour le pilote.

Une chute de puissance du rotor principal, par l'intermédiaire d'une réduction de la vitesse de rotation du rotor principal, peut aussi être détectée lors de la phase d'atterrissage en tant que telle. La machine électrique peut alors être commandée pour fonctionner en mode moteur pour fournir une puissance mécanique auxiliaire au rotor principal. Le pilote peut alors disposer d'une énergie supplémentaire pour effectuer un atterrissage sans impact brutal sur le sol et en limitant le glissé de l'aéronef sur le sol.

La machine électrique peut en outre être sollicitée avant l'atterrissage pour fournir un surcroit de puissance afin d'éviter un obstacle.

Dans ces conditions, la machine électrique peut tendre à optimiser la masse maximale au décollage de l'aéronef et/ou le domaine de vol de cet aéronef.

Le document EP 2 974 964 divulgue quant à lui une architecture électrique d'un aéronef comprenant un ensemble de transmission de puissance relié au moins à un rotor de sustentation et entraîné par au moins un moteur thermique, cette architecture électrique comprenant un réseau électrique à haute tension incluant une machine électrique principale destinée à être reliée à ce moteur thermique et une machine électrique secondaire destinée à être reliée à l'ensemble de transmission de puissance.

En outre, un tel aéronef comporte une machine électrique secondaire 9 qui peut être mécaniquement connectée à la boîte de transmission de puissance 61 ou à une boîte à accessoires 62. Par ailleurs, chaque machine électrique secondaire 9 fonctionne soit dans un mode moteur électrique durant lequel la machine électrique secondaire 9 prélève de l'énergie électrique pour entraîner au moins partiellement l'ensemble 60 de transmission de puissance, soit dans un mode générateur électrique durant lequel la machine électrique secondaire 9 est entraînée par l'ensemble 60 de transmission de puissance pour générer de l'énergie électrique.

Les documents US2016059957 et US2014263820 décrivent un aéronef muni d'un moteur thermique relié à une boîte de transmission de puissance. Cette boîte de transmission de puissance peut comprendre une sortie mettant en rotation une pompe hydraulique. De plus, l'aéronef peut comporter un système d'assistance à l'autorotation. Le système d'assistance à l'autorotation peut être relié à une entrée dédiée de la boîte de transmission de puissance, et notamment directement, à savoir sans engrenage intermédiaire. Le système d'assistance à l'autorotation peut stocker de l'énergie durant une phase de fonctionnement normal et peut utiliser cette énergie durant une phase de panne pour transmettre une puissance mécanique à la boîte de transmission de puissance. Selon la variante, le système d'assistance à l'autorotation peut comprendre une machine électrique réversible pouvant fonctionner alternativement en mode moteur et en mode générateur électrique, un moteur hydraulique ou un système mécanique de stockage de puissance tel qu'un arrangement à ressort.

Les documents US2018362152 et US2018362152 sont aussi connus.

Le document US2017174355 est éloigné de l'invention en divulguant un système d'assistance électrique au rotor arrière.

Le document EP3524519 est éloigné de l'invention en divulguant un aéronef multimoteur comprenant un système de surveillance pour déterminer une panne moteur.

Le document EP 2 735 508 est éloigné de l'invention mais divulgue quant à lui un système pour assister l'autorotation présentant également un système de détection d'une panne du moteur. Il décrit notamment l'utilisation de capteurs de vitesse telle une roue phonique pour surveiller des pannes de moteur.

Le document EP 2 735 507 est également éloigné de l'invention car il duvulgue un autre type d'installation motrice pour giravion.

Dans ce contexte, l'agencement au sein d'un aéronef à voilure tournante d'un moteur électrique sur une entrée dédiée d'une boîte de transmission de puissance implique de concevoir une boîte de transmission de puissance spécifique.

En outre, l'agencement au sein d'un aéronef à voilure tournante d'un moteur électrique en utilisant un arbre d'entrée de puissance existant implique de développer un moyen de conjugaison mécanique entre le moteur électrique et le ou les moteurs thermiques. Un tel moyen de conjugaison mécanique peut être délicat à obtenir en raison des vitesses de rotation très différentes du moteur électrique et du ou des moteurs thermiques.

La présente invention a alors pour objet de proposer un aéronef innovant visant à faciliter le contrôle de l'aéronef suite à une panne d'au moins un moteur thermique.

L'invention vise un aéronef comme défini dans la revendication 1.

Selon l'invention, un tel aéronef est remarquable en ce que le moteur électrique est un moteur irréversible fonctionnant uniquement en mode moteur, le moteur électrique étant sollicité pour mettre en mouvement ledit arbre principal de sortie en cas de panne d'au moins un moteur thermique via le module de connexion mécanique.

Un tel type de moteur présente en effet l'avantage de limiter la fonction du moteur électrique au seul système d'assistance. La fiabilité d'un tel type de moteur électrique et de son électronique de gestion est donc optimale.

L'expression « arbre de connexion connecté à l'arbre secondaire de sortie » signifie qu'une rotation de l'arbre secondaire de sortie induit une rotation de l'arbre de connexion et inversement. Par exemple, l'arbre de connexion comporte des cannelures intermédiaires qui engrènent des cannelures de la boîte de transmission de puissance.

Lors de la panne d'un moteur thermique, le moteur électrique peut mettre en mouvement l'arbre principal de sortie via le module de connexion mécanique pour permettre d'aider le pilote à rentrer dans la phase d'autorotation, et/ou de gérer cette autorotation pour par exemple éviter un obstacle et/ou pour atterrir en sécurité, selon les enseignements précédents et notamment selon l'enseignement du document US 9045223.

Par contre, le système d'assistance s'avère relativement simple à agencer sur une architecture d'aéronef préexistante. Ce système d'assistance peut notamment être agencé relativement facilement sur un aéronef en positionnant le module de connexion cinématiquement entre un accessoire existant et l'arbre de sortie associé. Le système d'assistance peut alors être une option sécuritaire qui ne remet pas en cause la certification de l'aéronef.

En effet, l'invention propose d'aller à l'encontre de préjugés et de connecter le moteur électrique non pas à un arbre d'entrée de puissance partagé ou dédié, mais étonnamment à un arbre secondaire de sortie transmettant à un accessoire une puissance mécanique issue de cette boîte de transmission de puissance. Le module de connexion mécanique peut effectivement être dimensionné pour être réversible, à savoir pour transmettre une puissance mécanique via l'arbre de connexion selon deux sens différents.

Ainsi, dans un mode optimal mis en oeuvre hors cas de panne d'un moteur thermique, le module de connexion mécanique permet de transmettre une puissance mécanique dans un sens récepteur de puissance de l'arbre secondaire de sortie vers l'arbre de connexion. Dans ce cas, le module de connexion mécanique reçoit une puissance mécanique générée par la boîte de transmission de puissance.

A l'inverse, dans un mode dégradé mis en oeuvre en présence d'une panne d'un moteur thermique, le module de connexion mécanique permet de transmettre une puissance mécanique selon un sens moteur de l'arbre de connexion vers l'arbre secondaire de sortie. Dans ce cas, le module de connexion mécanique génère une puissance mécanique consommée au moins par la boîte de transmission de puissance pour l'entraînement de la voilure tournante.

De plus, dans le mode dégradé, le module de connexion mécanique peut selon une possibilité permettre au moteur électrique de mettre en mouvement l'accessoire.

L'aéronef peut de plus comporter une ou plusieurs des caractéristiques qui suivent, prises seules ou en combinaison.

En pratique, le ou les accessoires peuvent être choisis parmi le groupe comportant les pompes hydrauliques, les ventilateurs mécaniques, les générateurs électriques et les compresseurs pneumatiques.

Autrement dit, le ou les accessoires ne doivent pas être considérés comme des moyens sustentateurs ou propulsifs permettant à l'aéronef de voler et/ou de se maintenir en position dans les airs lors d'une phase de vol stationnaire. Plus précisément, les accessoires ne peuvent donc être formés par un rotor, par un arbre d'entrainement d'un rotor, par une hélice propulsive ou tractive ou par un arbre d'entrainement d'une hélice.

Selon une alternative de l'invention, le ou les accessoires peuvent comporter une première pompe hydraulique, la première pompe hydraulique appartenant à un circuit hydraulique de l'aéronef, le circuit hydraulique étant relié à une pluralité de servocommandes pour piloter un pas des pales de la voilure tournante.

Selon un aspect, le circuit hydraulique peut comporter une deuxième pompe hydraulique mise en mouvement par la boîte de transmission de puissance, ladite première liaison mécanique comporte un système de désaccouplement configuré pour désaccoupler la première pompe hydraulique de l'arbre de connexion en cas de panne d'un moteur thermique.

Selon un aspect, la deuxième liaison mécanique peut comporter une roue libre configurée pour transmettre une puissance mécanique uniquement du moteur électrique vers l'arbre arbre de connexion.

Une roue libre comporte usuellement une partie menante et une partie menée entre lesquelles se trouvent au moins un organe de connexion. Lorsque la partie menée effectue une rotation à une vitesse plus rapide que la partie menante, la partie menante et la partie menée ne sont pas solidarisées en rotation. La roue libre est dite glissante dans cette configuration.

La roue libre peut relier cinématiquement l'arbre de connexion et le moteur électrique seulement en cas de panne d'un moteur thermique. En outre, en cas de panne ou d'arrêt d'un moteur thermique et donc d'une immobilisation ou d'un ralentissement de la partie menée de la roue libre, la roue libre mécanique s'enclenche automatiquement dès que le moteur électrique est mis en mouvement ou que la partie menante atteint la vitesse de rotation de la partie menée.

La roue libre permet donc de transférer une puissance mécanique à la boîte de transmission de puissance en cas de panne d'un moteur thermique et d'éviter l'entraînement du moteur électrique par la boîte de transmission de puissance dans le cas contraire.

Alternativement, le moteur électrique peut être une machine électrique réversible. La machine électrique peut fonctionner dans un mode générateur électrique hors cas de panne d'un moteur thermique. Dans ce mode, cette machine électrique est entraînée par la boîte de transmission de puissance via le module de connexion mécanique pour produire une énergie électrique. A l'inverse, la machine électrique peut fonctionner dans un mode moteur en présence d'une telle panne.

Selon un aspect, le système d'assistance peut comporter un calculateur de surveillance relié au moteur électrique.

Le calculateur de surveillance peut être en communication avec un calculateur moteur d'un moteur thermique. Un tel calculateur moteur est en effet à même de déterminer qu'au moins un moteur thermique est en panne de manière usuelle. Dès lors, le cas échéant, le calculateur moteur peut transmettre un signal de commande au calculateur de surveillance quand le calculateur moteur détecte une telle panne.

De manière complémentaire ou alternative, selon un aspect, le système d'assistance peut comporter un calculateur de surveillance relié au moteur électrique et à un senseur permettant une détection d'une panne d'un moteur thermique, le calculateur de surveillance étant configuré pour requérir le fonctionnement du moteur électrique en cas d'une détection d'une dite panne d'un moteur thermique.

Le système d'assistance peut ainsi comprendre son propre senseur pour détecter une panne d'un moteur thermique indépendamment de l'information « perte moteur » provenant du calculateur moteur. Cette caractéristique permet d'être robuste même en cas de panne conjointe d'un moteur thermique et de son calculateur moteur.

Indépendamment de la source signalant une panne d'un moteur thermique au calculateur de surveillance, lorsque le calculateur de surveillance reçoit un signal indiquant la panne d'un moteur thermique, ce calculateur de surveillance transmet un signal d'actionnement au moteur électrique. Un tel signal d'actionnement peut prendre la forme d'un signal analogique, numérique ou optique. Le moteur électrique génère ensuite une puissance motrice transmise à la boîte de transmission de puissance pour entretenir la rotation de la voilure tournante et permettre au pilote d'élargir son cône d'atterrissage et/ou de mieux maîtriser l'autorotation.

Eventuellement, le calculateur de surveillance peut être sollicité lors d'une procédure de tests.

Ainsi, avant le démarrage du ou des moteurs thermiques, une interface homme-machine peut être manoeuvrée pour transmettre un signal de commande au calculateur de surveillance afin de mettre en mouvement le moteur électrique pendant un temps court. Par exemple, cette procédure de tests est réalisée tant que la voilure tournante n'est pas en rotation.

De manière complémentaire ou alternative, après le démarrage du ou des moteurs thermiques et une mise en rotation de la voilure tournante, la procédure de tests peut comporter d'autres étapes. Ainsi, une interface homme-machine peut être manoeuvrée pour transmettre un signal de commande au calculateur de surveillance afin de mettre en mouvement le moteur électrique à une vitesse de ralenti inférieure sa vitesse de rotation nominale permettant un entrainement en rotation de la voilure tournante. Une telle mise en rotation du moteur électrique permet alors de vérifier que le système est opérationnel et plus particulièrement que le cas échéant la roue libre fonctionne correctement.

Alternativement ou de façon complémentaire, une telle procédure de test peut également être réalisée automatiquement par le calculateur de surveillance sans nécessiter une action de la part d'un pilote de l'aéronef via une interface homme-machine.

Selon un aspect, ledit senseur peut comporter un capteur de vitesse émettant un signal qui varie en fonction de la vitesse de rotation de l'arbre de connexion.

Par exemple, le senseur peut être intégré au module de connexion mécanique.

Par exemple, le capteur de vitesse de rotation peut comporter une roue phonique solidaire en rotation de l'arbre de connexion et un capteur inductif agencé en regard de la roue phonique
Le système d'assistance comporte un équipement moteur logeant ledit moteur électrique.

Eventuellement, un même équipement dénommé par commodité « équipement moteur » loge à la fois le moteur électrique et le cas échéant le calculateur de surveillance.

Le module de connexion mécanique comporte un carter dans lequel se trouve au moins partiellement l'arbre de connexion ainsi que la première liaison mécanique et le deuxième organe de connexion, ledit carter étant fixé à la boîte de transmission de puissance, ledit accessoire étant fixé audit carter, ledit équipement moteur étant fixé audit carter.

Dès lors, le système d'assistance peut être fixé relativement facilement à la boîte de transmission de puissance.

Selon un aspect, la deuxième liaison mécanique peut comporter au moins un étage d'engrenages de réduction de vitesse.

Chaque étage d'engrenages de réduction de vitesse peut tendre à aligner la vitesse de rotation de l'arbre de connexion sur une vitesse de rotation objective de l'arbre secondaire de sortie et d'une entrée de l'accessoire. Par exemple, le moteur électrique peut avoir une sortie tournant à une vitesse de l'ordre de 20000 tours par minute et l'arbre de connexion tourne quant à lui à une vitesse de rotation de l'ordre de 6000 tours par minute.

Eventuellement, ledit au moins un étage d'engrenages de réduction de vitesse comporte un premier étage de réduction de vitesse de rotation relié au moteur électrique et à un deuxième étage de réduction de vitesse de rotation, le deuxième étage de réduction de vitesse de rotation étant relié à l'arbre de connexion.

Eventuellement, la roue libre précitée est agencée entre une roue du deuxième étage de réduction de vitesse de rotation et l'arbre de connexion.

Par exemple, le système de désaccouplement comporte un embrayage commandé par le calculateur de surveillance.

Une variante peut être d'agencer non pas un mais deux accessoires entraînés par la boîte de transmission de puissance. Dans ce cas, le premier accessoire est déconnecté de l'arbre de connexion par le système de désaccouplement lorsque le moteur électrique devient actif afin d'éviter un prélèvement de puissance mécanique par ce premier accessoire.

Selon un aspect, la première liaison mécanique peut comporter un organe d'accouplement autorisant un désalignement.

Par exemple, un tel organe d'accouplement peut comprendre deux flasques reliées par un moyeu ou un anneau déformable.

Selon un aspect, le premier organe de connexion peut comporter des cannelures de liaison en prise sur des cannelures réceptrices de l'accessoire.

Selon un aspect, ledit deuxième organe de connexion peut comporter des cannelures de connexion en prise sur des cannelures motrices du moteur électrique.

Selon un aspect, ledit système d'assistance peut comporter au moins une batterie à haute tension électrique continue reliée électriquement, directement ou indirectement par exemple via le cas échéant le calculateur de surveillance, au moteur électrique.

Une telle batterie à haute tension peut par exemple être choisie parmi les batteries d'accumulateurs du type rechargeable ou non rechargeable, les batteries d'accumulateurs du type amorçable ou encore parmi les supercondensateurs à électrolyte organique, à électrolyte aqueux, avec liquide ionique, les supercondensateurs hybrides et les pseudo-supercondensateurs.

Selon un aspect, l'aéronef peut comporter un réseau électrique à basse tension électrique comprenant au moins une source d'énergie électrique à basse tension électrique, ledit réseau électrique à basse tension électrique ayant un convertisseur électrique relié à ladite au moins une batterie électrique.

Une telle source d'énergie électrique à basse tension électrique peut comprendre une prise de parc, un générateur électrique tel qu'un équipement apte à remplir une fonction de générateur électrique et une fonction de démarreur d'un moteur thermique, une batterie à basse tension électrique...

Dans ces conditions, le réseau électrique à basse tension électrique peut alimenter électriquement le moteur électrique si nécessaire.

L'invention et ses avantages apparaîtront avec plus de détails dans le cadre de la description qui suit avec des exemples donnés à titre illustratif en référence aux figures annexées qui représentent :
[Fig 1] la figure 1, un schéma illustrant un aéronef selon l'invention,
[Fig 2] la figure 2, une vue partielle interne de la boîte de transmission de puissance de l'aéronef de la figure 1,
[Fig 3] la figure 3, une vue externe de la boîte de transmission de puissance de l'aéronef de la figure 1 équipée d'un système d'assistance selon l'invention,
[Fig 4] la figure 4, une vue en trois dimensions d'un module de connexion selon l'invention,
[Fig 5] la figure 5, un schéma illustrant module de connexion selon l'invention, et
[Fig 6] la figure 6, une vue d'un senseur permettant une détection de panne ayant une roue phonique et un capteur inductif.

Les éléments présents dans plusieurs figures distinctes sont affectés d'une seule et même référence.

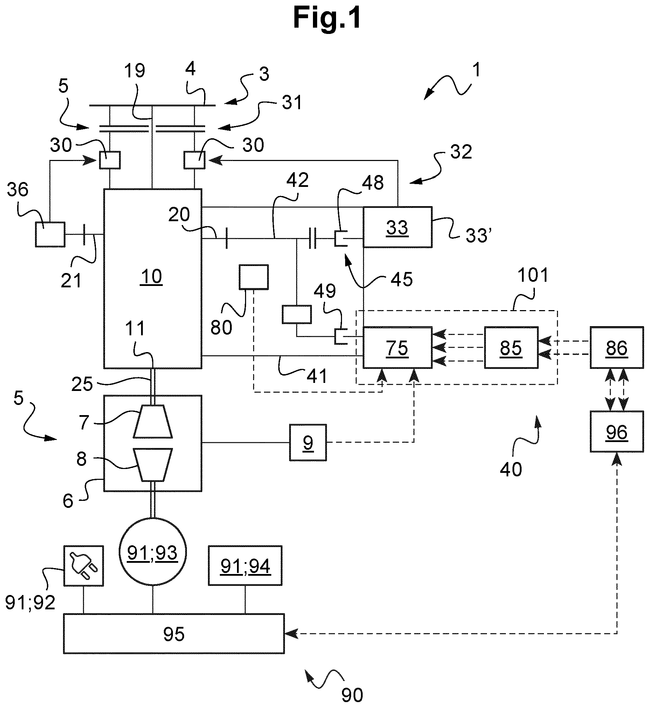

La figure 1 présente un schéma illustrant un aéronef 1 selon l'invention. L'aéronef 1 est muni d'une voilure tournante 3. La voilure tournante 3 comporte une pluralité de pales 4.

Pour mettre en rotation les pales 4 autour d'un axe de rotation de la voilure tournante 3, l'aéronef 1 est muni d'une installation motrice 5.

Cette installation motrice 5 comprend au moins un moteur thermique 6. Eventuellement, cette installation motrice 5 est une installation monomoteur comprenant un unique moteur thermique 6. Le ou les moteurs thermiques 6 sont des moteurs à combustion interne. Selon l'exemple illustré, le ou les moteurs thermiques 6 sont des turbomoteurs ayant un générateur de gaz 8 et une turbine de travail 7, et notamment une turbine de travail 7 libre selon cet exemple. Alternativement, le ou les moteurs thermiques 6 sont par exemple des moteurs à pistons.

Ce moteur thermique 6 peut être piloté et surveillé de manière usuelle par un calculateur moteur 9 et de multiples capteurs usuels non représentés.

Un calculateur peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, l'installation motrice 5 comporte une boîte de transmission de puissance 10 mise en mouvement par le ou les moteurs thermiques 6. La boîte de transmission de puissance 10 est de plus reliée à la voilure tournante 3 pour mettre en rotation cette voilure tournante 3 sous l'impulsion d'un moteur thermique 6 dans un mode de fonctionnement normal.

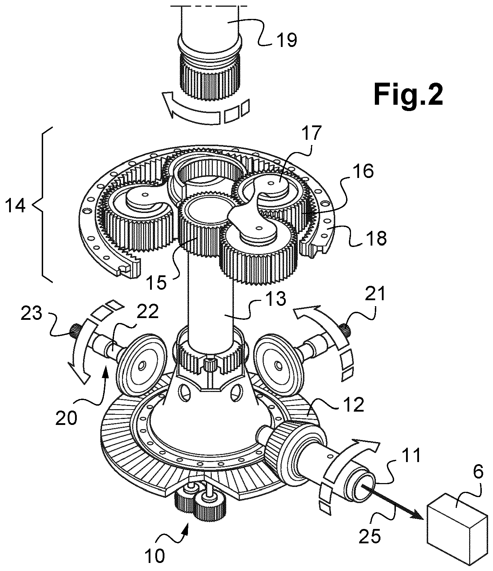

La boîte de transmission de puissance 10 peut être d'un type usuel. La figure 2 illustre un exemple de boîte de transmission de puissance 10.

Cette boîte de transmission 10 comporte un arbre d'entrée 11 lié mécaniquement par une liaison mécanique d'entrée 25 au moteur thermique 6. La liaison mécanique d'entrée 25 peut comprendre une roue libre ou équivalent, au moins un arbre, au moins un moyen d'accouplement autorisant un désalignement... Cet arbre d'entrée 11 peut mettre en mouvement des organes tournants de la boîte de transmission de puissance 10 pour entraîner en rotation un arbre principal de sortie 19 mettant en rotation la voilure tournante 3. Un tel arbre principal de sortie 19 peut être relié à un mât rotor de la voilure tournante 3 ou être une partie de ce mât rotor.

Par exemple, l'arbre d'entrée 11 engrène une roue 12 parfois dénommée grande roue par commodité et en raison de ses dimensions. Cette grande roue 12 est solidaire en rotation d'un arbre interne 13 mettant en mouvement au moins un étage de réduction de vitesse épicycloïdal 14.

Par exemple, cet étage de réduction de vitesse épicycloïdal 14 comporte un pignon planétaire 15 solidaire de l'arbre interne 13. De plus, cet étage de réduction de vitesse épicycloïdal 14 comprend une pluralité de roues-satellites 16 qui roulent à la fois sur le pignon planétaire 15 et une couronne externe fixe 18. Les roues-satellites 16 sont portées par un porte-satellites 17 qui engrène l'arbre principal de sortie 19, au travers d'un jeu de cannelures par exemple.

Par ailleurs, la boîte de transmission de puissance 10 peut comporter au moins un arbre secondaire de sortie 20, 21 de puissance pour mettre en mouvement au moins un accessoire 33, tel qu'une première pompe hydraulique 33'. Par exemple, au moins un arbre secondaire de sortie 20, 21 est engrené par la grande roue 12. Au moins un arbre secondaire de sortie 20, 21 peut comprendre une section fusible 22 et/ou des cannelures 23

Selon un autre aspect et en référence à nouveau à la figure 1, le pas des pales 4 de la voilure tournante 3 peut être commandé par des commandes de vol. Par exemple, l'aéronef 1 comporte un ensemble de plateaux cycliques 31 usuel muni d'un plateau non tournant et d'un plateau tournant, le plateau tournant étant relié à chaque pale 4 ou à chaque manchon de pale via une bielle de pas.

De plus, l'aéronef 1 peut comporter des servocommandes 30 hydrauliques ayant au moins un corps mobile et une tige fixe ou une tige mobile et au moins un corps fixe. Chaque servocommande 30 est ainsi articulée au plateau non tournant et à un organe non tournant de l'aéronef 1. Par exemple, chaque servocommande 30 est munie d'un levier de commande relié à des commandes de vol, un mouvement du levier de commande permettant par exemple de déplacer un tiroir de la servocommande.

Pour alimenter hydrauliquement chaque corps des servocommandes 30, l'aéronef 1 comporte un circuit hydraulique 32. Ce circuit hydraulique 32 comporte au moins une première pompe hydraulique 33' mise en mouvement par un arbre secondaire de sortie 20 de la boîte de transmission de puissance 10. La première pompe hydraulique 33' est en communication fluidique avec au moins un corps des servocommandes 30.

Eventuellement, le circuit hydraulique 32 comporte au moins une deuxième pompe hydraulique 36 mise en mouvement par un autre arbre secondaire de sortie 21 de la boîte de transmission de puissance 10

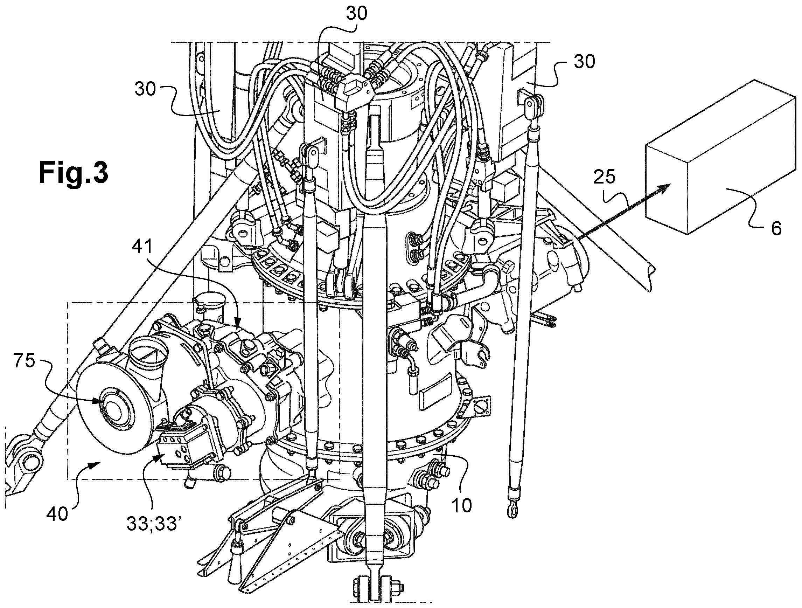

Selon un autre aspect et en référence à la figure 3, l'aéronef 1 comporte un système d'assistance 40 pour assister dans un mode de fonctionnement dégradé un pilote en cas de panne d'un moteur thermique 6.

Ce système d'assistance 40 est muni d'un moteur électrique 75. Un tel moteur électrique 75 est formé par un moteur irréversible fonctionnant uniquement en mode moteur, et donc ne pouvant pas servir pour générer une énergie électrique.

De plus, le système d'assistance 40 est muni d'un module de connexion mécanique 41 permettant de connecter mécaniquement le moteur électrique 75 et la première pompe hydraulique 33' à un même arbre secondaire de sortie 20 de la boîte de transmission de puissance 10.

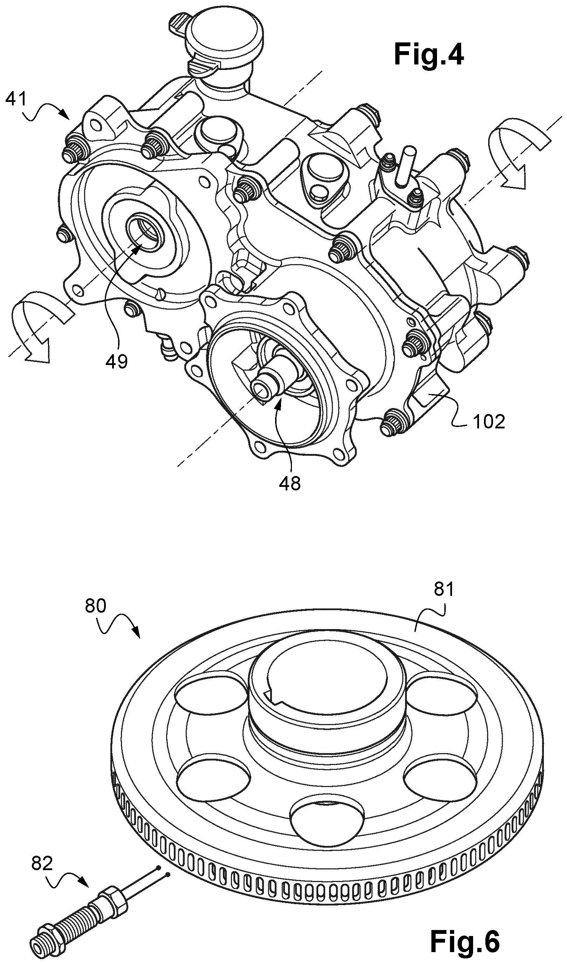

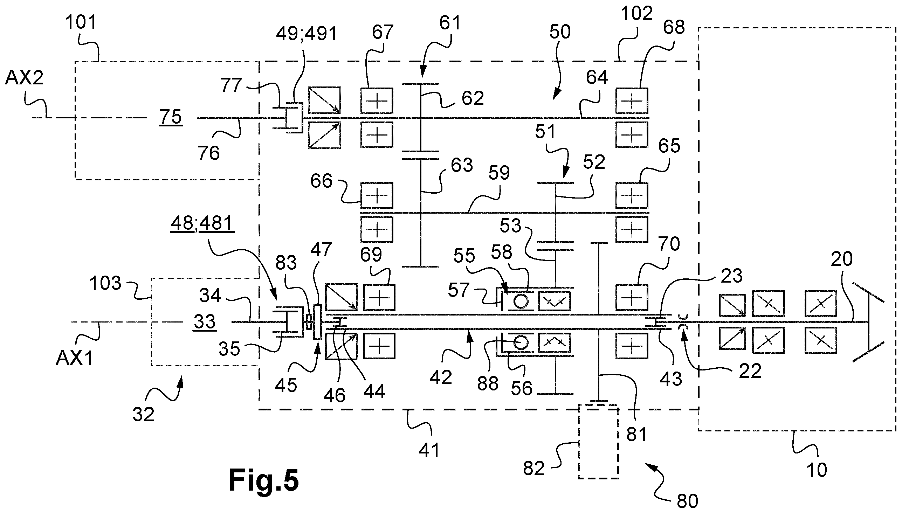

Les figures 4 et 5 illustrent un tel module de connexion mécanique 41.

En particulier, la figure 5 présente un schéma montrant un exemple de réalisation du module de connexion mécanique 41.

Ce module de connexion mécanique 41 possède un arbre de connexion 42 qui est mécaniquement connecté à l'arbre secondaire de sortie 20. Par exemple, l'arbre de connexion 42 est équipé de cannelures 43 en prise sur des cannelures 23 de l'arbre secondaire de sortie 20. Cet arbre de connexion 42 peut aussi être guidé par au moins deux organes de roulement 69, 70.

En outre, le module de connexion mécanique 41 est muni d'un premier organe de connexion 48 connecté à la première pompe hydraulique 33'. Selon l'exemple illustré, le premier organe de connexion 48 comporte des cannelures de liaison 481 en prise sur des cannelures réceptrices 35 d'un arbre d'entraînement 34 de la première pompe hydraulique 33'.

Le premier organe de connexion 48, et en l'occurrence les cannelures de liaison 481 selon l'exemple illustré, est relié par une première liaison mécanique 45 interne à l'arbre de connexion 42.

Une telle première liaison mécanique 45 peut être réduite à sa plus simple expression en représentant un moyen de solidarisation du premier organe de connexion 48 à l'arbre de connexion 42, tel qu'un moyen de soudure par exemple. Le cas échéant, l'arbre de connexion 42 peut être usiné pour présenter les cannelures de liaison 481.

Selon un autre exemple, la première liaison mécanique 45 peut comprendre au moins un arbre de liaison et/ou un système de désaccouplement 83 et/ou un organe d'accouplement 47 et/ou des cannelures 46 en prise sur des cannelures 44 de l'arbre de connexion 42.

En particulier, la première liaison mécanique 45 peut comporter un organe d'accouplement 47 autorisant un désalignement entre deux organes mécaniques. Selon un exemple, un tel organe d'accouplement 47 peut comprendre un premier flasque solidarisé à l'arbre de connexion 42, directement ou indirectement via des cannelures 46 en prise sur des cannelures 44 de l'arbre de connexion 42, et un deuxième flasque lié par un organe souple au premier flasque. L'organe souple peut autoriser un désalignement axial et/ou radial entre les flasques.

### Le deuxième flasque peut être relié directement ou indirectement au premier organe de connexion 48

De manière complémentaire ou alternative, un système de désaccouplement 83 peut être configuré pour désaccoupler la première pompe hydraulique 33' de l'arbre de connexion 42 en cas de panne d'un moteur thermique 6. Un tel système de désaccouplement 83 peut notamment être sollicité lorsque le circuit hydraulique 32 comporte une deuxième pompe hydraulique 36 mise en mouvement par la boîte de transmission de puissance 10. Un tel système de désaccouplement 83 peut par exemple comprendre un embrayage.

Selon l'exemple illustré, la première liaison mécanique 45 comporte ainsi successivement des cannelures 46 en prise sur des cannelures 44 de l'arbre de connexion, un arbre de liaison reliant les cannelures 46 à un organe d'accouplement 47, un système de désaccouplement 83, puis le premier organe de connexion 48.

Selon un autre aspect, le module de connexion mécanique 41 comporte un deuxième organe de connexion 49 connecté au moteur électrique 75. Selon l'exemple illustré, le deuxième organe de connexion 49 comporte des cannelures de connexion 491 en prise sur des cannelures motrices 77 d'un arbre moteur de sortie 76 du moteur électrique 75.

Le deuxième organe de connexion 49, et en l'occurrence les cannelures de connexion 491 selon l'exemple illustré, est relié par une deuxième liaison mécanique 50 interne à l'arbre de connexion 42. Le deuxième organe de connexion 49 peut être mobile en rotation autour d'un deuxième axe AX2 parallèle à un premier axe AX1 autour duquel le premier organe de connexion 48 est mobile en rotation. Eventuellement, l'arbre de connexion est aussi mobile en rotation autour du premier axe de rotation AX1.

La deuxième liaison mécanique 50 peut être réduite à sa plus simple expression ou peut éventuellement comprendre au moins un étage 51, 61 d'engrenages de réduction de vitesse. A titre illustratif, le moteur électrique 75 peut être dimensionné pour entraîner en rotation son arbre moteur de sortie 76 en rotation à environ 20000 tours par minute alors que l'arbre de connexion 42 est configuré pour effectuer une rotation à environ 6000 tours par minute.

Selon l'exemple illustré, la deuxième liaison mécanique 50 comporte un premier étage 61 d'engrenages de réduction de vitesse mettant en mouvement un deuxième étage 51 d'engrenages de réduction de vitesse connecté à l'arbre de connexion 42.

Par exemple, la deuxième liaison mécanique 50 comporte un premier arbre interne 64 solidaire du deuxième organe de connexion 49. Par exemple, le deuxième organe de connexion 49 comporte des cannelures du premier arbre interne 64. Ce premier arbre interne 64 peut être guidé en rotation par au moins deux organes de roulement 67, 68. De plus, le premier arbre interne 64 porte un premier pignon 62 du premier étage 61.

La deuxième liaison mécanique 50 peut comporter un deuxième arbre interne 59. Ce deuxième arbre interne 59 peut être guidé en rotation par au moins deux organes de roulement 65, 66. De plus, le deuxième arbre interne 59 porte une première roue 63 du premier étage 61. La première roue 63 est engrenée par le premier pignon 62 et peut comprendre un nombre de dents supérieur au nombre de dents du premier pignon 62. Par exemple, le premier pignon 62 comporte 18 dents et la première roue 63 comporte 37 dents.

De plus, le deuxième arbre interne 59 porte un deuxième pignon 52 du deuxième étage 51. Le deuxième pignon 52 engrène une deuxième roue 53 du deuxième étage 51, cette deuxième roue 53 étant reliée à l'arbre de connexion 42 directement ou indirectement. La deuxième roue 53 peut comprendre un nombre de dents supérieur au nombre de dents du deuxième pignon 52. Par exemple, le deuxième pignon 52 comporte 19 dents et la deuxième roue 53 comporte 42 dents.

Selon un aspect, la deuxième liaison mécanique 50 peut comporter une roue libre 55. Cette roue libre 55 a pour fonction de transmettre une puissance mécanique uniquement du moteur électrique 75 vers l'arbre de connexion 42.

De manière usuelle, la roue libre 55 comporte une partie menante 56, une partie menée 57 et au moins un organe de connexion 58 interposé entre la partie menante 56 et la partie menée 57 pour les lier en rotation lorsque la partie menante 56 tend à effectuer une rotation à une vitesse supérieure ou égale à la partie menée 57. Par exemple, un organe de connexion 58 peut prendre la forme d'une bille, d'un rouleau, d'un cliquet...

Selon l'exemple illustré, la partie menante 56 peut être solidarisée à la deuxième roue 53 par des moyens usuels, tels que des moyens de vissage, de soudure, des cannelures... Dès lors, la partie menée 57 peut être solidarisée à l'arbre de connexion 42 par des moyens usuels, tels que des moyens de vissage, de soudure, des cannelures...

Selon un autre aspect, le moteur électrique 75 peut être logé au moins partiellement au sein d'une enveloppe d'un sous-ensemble dénommé « équipement moteur 101 » par commodité. Par exemple, l'arbre moteur de sortie 76 du moteur électrique 75 sort de cette enveloppe pour pénétrer dans le deuxième organe de connexion 49. L'enveloppe peut comprendre une ou plusieurs pièces fixées les unes aux autres.

De même, un carter 102 est compris dans le module de connexion mécanique 41. Un tel carter 102 permet ainsi de loger au moins partiellement l'arbre de connexion 42 ainsi que la première liaison mécanique 45 et le deuxième organe de connexion 49. Ce carter 102 peut comprendre une ou plusieurs pièces fixées les unes aux autres.

Selon l'exemple illustré, le carter 102 comporte une ouverture traversée par l'arbre secondaire de sortie 20, une ouverture traversée par l'arbre moteur de sortie 76 et une ouverture traversée par arbre d'entraînement 34 de la première pompe hydraulique 33'.

En outre, le carter 102 est fixé à la boîte de transmission de puissance 10, par exemple par des moyens de vissage. De même, une enveloppe 103 de la première pompe hydraulique 33' et une enveloppe de l'équipement moteur 101 sont chacune éventuellement fixées au carter 102, par exemple par des moyens de vissage.

Par ailleurs, le système d'assistance 40 peut comprendre un senseur 80 pour détecter une panne moteur du moteur thermique 6. Eventuellement, ce senseur 80 comporte un capteur de vitesse de rotation émettant un signal qui varie en fonction de la vitesse de rotation de l'arbre de connexion 42.

Selon la figure 6, le capteur de vitesse de rotation comporte une roue phonique 81 solidarisée de manière usuelle en rotation à l'arbre de connexion 42. La roue phonique 82 comporte une tranche présentant une succession de trous et de « dents ».

De plus, le capteur de vitesse de rotation comporte un capteur inductif 82 dirigé vers la roue phonique 81. Ce capteur inductif 82 peut être porté par le carter 102. Un capteur inductif 82 peut comporter un bobinage monté sur une tige métallique et un aimant permanent. Le capteur inductif 82 est monté face à la roue phonique 81. Le flux magnétique qui se produit entre les dents ou les trous de la roue phonique 81, permet au capteur inductif 82 de générer une tension électrique sinusoïdale qui varie en fonction de la vitesse de rotation de l'arbre de connexion 42 et de la distance séparant le capteur inductif 82 de la roue phonique 81. Selon un exemple, la roue phonique 81 comporte 94 trous et le capteur 82 est un capteur de la société honeywell^{®} connu sous la dénomination commerciale MA3055.

Selon un autre aspect et en référence à nouveau à la figure 1, le système d'assistance 40 comporte un calculateur de surveillance 85 relié au moteur électrique 75. Le calculateur de surveillance 85 peut faire partie de l'équipement moteur 101.

Le calculateur de surveillance 85 peut être relié par des liaisons filaires ou non filaires le cas échéant au senseur 80, au calculateur moteur 9 voire au système de désaccouplement 83 ou encore à au moins une interface homme/machine.

Selon un aspect, le système d'assistance 40 peut comporter au moins une batterie à haute tension électrique continue 86 qui est reliée électriquement au moteur électrique 75.

L'expression « haute tension électrique » fait référence à une tension électrique supérieure à 50 volts, et par exemple de 300 ou 500 volts.

Selon l'exemple de la figure 1, la batterie à haute tension électrique continue 86 est reliée au calculateur de surveillance 85, ce calculateur de surveillance 85 alimentant électriquement si besoin le moteur électrique 75.

Selon une possibilité, l'aéronef 1 peut aussi comporter un réseau électrique à basse tension électrique 90. L'expression basse tension électrique fait référence à une tension électrique inférieure à 50 volts, et par exemple de 28 volts. Ce réseau électrique à basse tension électrique 90 peut être muni d'au moins une source d'énergie électrique à basse tension électrique 91. Par exemple, ladite au moins une source d'énergie électrique à basse tension électrique 91 peut comprendre une prise de parc 92 et/ou une machine électrique 93 servant éventuellement de générateur électrique et de démarreur pour le moteur thermique 6 et/ou une batterie 94 électrique à basse tension. Chaque source d'énergie électrique à basse tension électrique 91 peut être électriquement reliée à un réseau de distribution électrique 95. De plus, un convertisseur électrique 96 courant continu à basse tension électrique/ courant continu à haute tension électrique peut être relié électriquement au réseau de distribution électrique 95 et à chaque batterie électrique à haute tension électrique continue 86.

Dans ces conditions, le moteur électrique 75 est inopérant durant un mode de fonctionnement normal, hors cas de test. Lorsque le calculateur de surveillance 85 reçoit un signal du senseur 80 ou du calculateur moteur 9 signalant une panne d'un moteur thermique, le calculateur de surveillance 85 est configuré pour requérir le fonctionnement du moteur électrique 75. Par exemple, le senseur 80 émet en permanence un signal porteur d'une vitesse de rotation courante de l'arbre de connexion 42. Par suite, dès que cette vitesse de rotation courante est inférieure à un seuil ou alternativement qu'une décélération dépasse une valeur de seuil, le calculateur de surveillance 85 active le moteur électrique 75.

Le moteur électrique 75 est alors activé pour mettre en mouvement la boîte de transmission de puissance 10 et participer à la mise en rotation de la voilure tournante 3.

Eventuellement, le calculateur de surveillance 85 désaccouple aussi la première pompe hydraulique 33' selon la variante.

Le calculateur de surveillance 85 peut aussi activer le moteur électrique 75 en appliquant d'autres logiques, par exemple sur la base de l'enseignement du document US 9045223.

Le moteur électrique 75 peut également être dans une configuration dite « armée » dans laquelle, il est entrainé en rotation préalablement à la détection d'une panne d'un moteur thermique mais à une vitesse de rotation inférieure à celle lui permettant d'entrainer en rotation l'arbre de connexion 42.

Par suite, dès que le calculateur de surveillance 85 reçoit un signal du senseur 80 ou du calculateur moteur 9 signalant une panne d'un moteur thermique, la vitesse de rotation de l'arbre moteur de sortie 76 du moteur électrique 75 peut être instantanément augmentée pour entrainer en rotation l'arbre de connexion 42 et éviter que sa vitesse de rotation diminue.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par les revendications ci-dessous.

## Revendications

1. Aéronef (1) muni d'une voilure tournante (3) et d'une installation motrice (5), ladite installation motrice (5) comprenant une boîte de transmission de puissance (10) pourvue d'un arbre principal de sortie (19) mettant en rotation ladite voilure tournante (3), ladite installation motrice (5) comprenant au moins un moteur thermique (6) relié par une liaison mécanique d'entrée (25) à un arbre d'entrée (11) de ladite boîte de transmission de puissance (10), ledit aéronef (1) comportant au moins un accessoire (33) mis en mouvement par un arbre secondaire de sortie (20) de la boîte de transmission de puissance (10),
ledit aéronef (1) comportant un système d'assistance (40) muni d'un module de connexion mécanique (41) ayant un arbre de connexion (42) connecté à l'arbre secondaire de sortie (20),
où ledit système d'assistance (40) comporte un équipement moteur (101) logeant un moteur électrique (75), ledit module de connexion mécanique (41) comportant un carter (102) dans lequel se trouve au moins partiellement l'arbre de connexion (42) ainsi qu'une première liaison mécanique (45) et un deuxième organe de connexion (49), ledit carter (102) étant fixé à la boîte de transmission de puissance (10), ledit au moins un accessoire (33) étant fixé audit carter (102), ledit équipement moteur (101) étant fixé audit carter (102), ledit système d'assistance (40) comportant un premier organe de connexion (48) connecté audit au moins un accessoire (33) et relié, par ladite première liaison mécanique (45) interne audit carter (102), à l'arbre de connexion (42), ledit module de connexion mécanique (41) comportant ledit deuxième organe de connexion (49) connecté audit moteur électrique (75) et relié, par une deuxième liaison mécanique (50) interne audit carter (102), à l'arbre de connexion (42),
et où ledit moteur électrique (75) est un moteur irréversible fonctionnant uniquement en mode moteur, ledit moteur électrique (75) étant sollicité pour mettre en mouvement ledit arbre principal de sortie (19) en cas de panne d'au moins un moteur thermique (6) via le module de connexion mécanique (41).

2. Aéronef selon la revendication 1,
**caractérisé en ce que** ledit au moins un accessoire (33) est choisi parmi le groupe comportant les pompes hydrauliques, les ventilateurs mécaniques, les générateurs électriques et les compresseurs pneumatiques.

3. Aéronef selon la revendication 2,
**caractérisé en ce que** ledit au moins un accessoire (33) comporte une première pompe hydraulique (33'), ladite première pompe hydraulique (33') appartenant à un circuit hydraulique (32) dudit aéronef (1), ledit circuit hydraulique (32) étant relié à une pluralité de servocommandes pour piloter un pas des pales (4) de la voilure tournante (3).

4. Aéronef selon la revendication 3,
**caractérisé en ce que** ledit circuit hydraulique (32) comporte une deuxième pompe hydraulique (36) mise en mouvement par la boîte de transmission de puissance (10), ladite première liaison mécanique (45) comporte un système de désaccouplement (83) configuré pour désaccoupler la première pompe hydraulique (33') de l'arbre de connexion (42) en cas de panne d'un moteur thermique (6).

5. Aéronef selon l'une quelconque des revendications 1 à 4,
**caractérisé en ce que** ladite deuxième liaison mécanique (50) comporte une roue libre (55) configurée pour transmettre une puissance mécanique uniquement du moteur électrique (75) vers l'arbre arbre de connexion (42).

6. Aéronef selon l'une quelconque des revendications 1 à 5,
**caractérisé en ce que** ledit système d'assistance (40) comporte un calculateur de surveillance (85) relié au moteur électrique (75) et à un senseur (80) permettant une détection d'une panne d'un moteur thermique, le calculateur de surveillance (85) étant configuré pour requérir le fonctionnement du moteur électrique (75) en cas d'une détection d'une dite panne d'un moteur thermique.

7. Aéronef selon la revendication 6,
**caractérisé en ce que** ledit senseur (80) comporte un capteur de vitesse de rotation (81, 82) émettant un signal qui varie en fonction de la vitesse de rotation de l'arbre de connexion (42).

8. Aéronef selon la revendication 7,
**caractérisé en ce que** le capteur de vitesse de rotation comporte une roue phonique (81) solidaire en rotation de l'arbre de connexion (42) et un capteur inductif (82) agencé en regard de la roue phonique (81).

9. Aéronef selon l'une quelconque des revendications 1 à 8,
**caractérisé en ce que** ladite deuxième liaison mécanique (50) comporte au moins un étage (51, 61) d'engrenages de réduction de vitesse.

10. Aéronef l'une quelconque des revendications 1 à 9,
**caractérisé en ce que** ladite première liaison mécanique (45) comporte un organe d'accouplement (47) autorisant un désalignement.

11. Aéronef selon l'une quelconque des revendications 1 à 10,
**caractérisé en ce que** ledit premier organe de connexion (48) comporte des cannelures de liaison (481) en prise sur des cannelures réceptrices (35) dudit au moins un accessoire (33).

12. Aéronef selon l'une quelconque des revendications 1 à 11,
**caractérisé en ce que** ledit deuxième organe de connexion (49) comporte des cannelures de connexion (491) en prise sur des cannelures motrices (77) du moteur électrique (75).

13. Aéronef selon l'une quelconque des revendications 1 à 12,
**caractérisé en ce que** ledit système d'assistance (40) comporte au moins une batterie à haute tension électrique continue (86) reliée électriquement au moteur électrique (75).

14. Aéronef selon la revendication 13,
**caractérisé en ce que** ledit aéronef (1) comporte un réseau électrique à basse tension électrique (90) comprenant au moins une source d'énergie électrique à basse tension électrique (91), ledit réseau électrique à basse tension électrique (90) ayant un convertisseur électrique (96) relié à ladite au moins une batterie électrique à haute tension électrique continue (86).

## Patentansprüche

1. Luftfahrzeug (1) mit einem Drehflügel (3) und einer Antriebsanlage (5), wobei die Antriebsanlage (5) ein Kraftübertragungsgetriebe (10) umfasst, das mit einer Hauptausgangswelle (19) versehen ist, die den Drehflügel (3) in Drehung versetzt, wobei die Antriebsanlage (5) mindestens einen Verbrennungsmotor (6) umfasst, der über eine mechanische Eingangsverbindung (25) mit einer Eingangswelle (11) des Leistungsgetriebes (10) verbunden ist, wobei das Luftfahrzeug (1) mindestens ein Zusatzgerät (33) umfasst, das durch eine sekundäre Ausgangswelle (20) des Kraftübertragungsgetriebes (10) angetrieben ist, wobei das Luftfahrzeug (1) ein Unterstützungssystem (40) umfasst, das mit einem mechanischen Verbindungsmodul (41) versehen ist, das eine mit der sekundären Ausgangswelle (20) verbundene Verbindungswelle (42) aufweist,
wobei das Unterstützungssystem (40) eine Motorausrüstung (101) umfasst, die einen Elektromotor (75) aufnimmt, wobei das mechanische Verbindungsmodul (41) ein Gehäuse (102) umfasst, in dem sich zumindest teilweise die Verbindungswelle (42) sowie eine erste mechanische Verbindung (45) und ein zweites Verbindungsglied (49) befinden, wobei das Gehäuse (102) an dem Kraft-übertragungsgetriebe (10) befestigt ist, wobei das mindestens eine Zusatzgerät (33) an dem Gehäuse (102) befestigt ist, die Motorausrüstung (101) an dem Gehäuse (102) befestigt ist, das Unterstützungssystem (40) ein erstes Verbindungsglied (48) aufweist, das mit dem mindestens einen Zusatzgerät (33) verbunden ist und durch die erste mechanische Verbindung (45) innerhalb des Gehäuses (102) mit der Verbindungswelle (42) verbunden ist, wobei das mechanische Verbindungsmodul (41) das zweite Verbindungsglied (49) umfasst, das mit dem Elektromotor (75) verbunden ist und durch eine zweite mechanische Verbindung (50) innerhalb des Gehäuses (102) mit der Verbindungswelle (42) verbunden ist,
und wobei der Elektromotor (75) ein irreversibler Motor ist, der nur im Motorbetrieb arbeitet, wobei der Elektromotor (75) beansprucht wird, um die Hauptabtriebswelle (19) bei einem Ausfall mindestens eines Verbrennungsmotors (6) über das mechanische Verbindungsmodul (41) in Bewegung zu setzen.

2. Luftfahrzeug nach Anspruch 1,
**dadurch gekennzeichnet, dass** das mindestens eine Zusatzgerät (33) aus der Gruppe ausgewählt ist, die aus hydraulischen Pumpen, mechanischen Lüftern, elektrischen Generatoren und pneumatischen Kompressoren besteht.

3. Luftfahrzeug nach Anspruch 2,
**dadurch gekennzeichnet, dass** das mindestens eine Zusatzgerät (33) eine erste Hydraulikpumpe (33') umfasst, wobei die erste Hydraulikpumpe (33') zu einem Hydraulikkreis (32) des Luftfahrzeugs (1) gehört, wobei der Hydraulikkreis (32) mit einer Mehrzahl von Servosteuerungen verbunden ist, um einen Anstellwinkel der Blätter (4) des Drehflügels (3) zu steuern.

4. Luftfahrzeug nach Anspruch 3,
**dadurch gekennzeichnet, dass** der Hydraulikkreis (32) eine zweite Hydraulikpumpe (36) umfasst, die durch das Kraftübertragungsgetriebe (10) angetrieben ist, wobei die erste mechanische Verbindung (45) ein Entkopplungssystem (83) umfasst, das konfiguriert ist, um die erste Hydraulikpumpe (33') im Falle eines Ausfalls eines Verbrennungsmotors (6) von der Verbindungswelle (42) zu entkoppeln.

5. Luftfahrzeug nach einem der Ansprüche 1 bis 4,
**dadurch gekennzeichnet, dass** die zweite mechanische Verbindung (50) einen Freilauf (55) aufweist, der konfiguriert ist, um mechanische Leistung nur vom Elektromotor (75) auf die Verbindungswelle (42) zu übertragen.

6. Luftfahrzeug nach einem der Ansprüche 1 bis 5,
**dadurch gekennzeichnet, dass** das Unterstützungssystem (40) einen Überwachungscomputer (85) umfasst, der mit dem Elektromotor (75) und einem Sensor (80) verbunden ist, der eine Detektion eines Ausfalls eines Verbrennungsmotors ermöglicht, wobei der Überwachungscomputer (85) konfiguriert ist, um im Falle einer Detektion eines besagten Ausfalls eines Verbrennungsmotors den Betrieb des Elektromotors (75) anzufordern.

7. Luftfahrzeug nach Anspruch 6,
**dadurch gekennzeichnet, dass** der Sensor (80) einen Drehgeschwindigkeitssensor (81, 82) umfasst, der ein Signal ausgibt, das sich in Abhängigkeit von der Drehgeschwindigkeit der Verbindungswelle (42) ändert.

8. Luftfahrzeug nach Anspruch 7,
**dadurch gekennzeichnet, dass** der Drehgeschwindigkeitssensor ein Tonrad (81), das drehfest mit der Verbindungswelle (42) verbunden ist, und einen induktiven Sensor (82) umfasst, der dem Tonrad (81) zugewandt angeordnet ist.

9. Luftfahrzeug nach einem der Ansprüche 1 bis 8,
**dadurch gekennzeichnet, dass** die zweite mechanische Verbindung (50) mindestens eine Untersetzungsgetriebestufe (51, 61) umfasst.

10. Luftfahrzeug nach einem der Ansprüche 1 bis 9,
**dadurch gekennzeichnet, dass** die erste mechanische Verbindung (45) ein Kopplungsorgan (47) umfasst, das eine Schiefstellung zulässt.

11. Luftfahrzeug nach einem der Ansprüche 1 bis 10,
**dadurch gekennzeichnet, dass** das erste Verbindungsorgan (48) Verbindungsrillen (481) aufweist, die mit Aufnahmerillen (35) des mindestens einen Zusatzgeräts (33) in Eingriff stehen.

12. Luftfahrzeug nach einem der Ansprüche 1 bis 11,
**dadurch gekennzeichnet, dass** das zweite Verbindungsorgan (49) Verbindungsrillen (491) aufweist, die mit Antriebsrillen (77) des Elektromotors (75) in Eingriff stehen.

13. Luftfahrzeug nach einem der Ansprüche 1 bis 12,
**dadurch gekennzeichnet, dass** das Unterstützungssystem (40) mindestens eine elektrische Hochspannungs-Gleichstrombatterie (86) umfasst, die mit dem Elektromotor (75) elektrisch verbunden ist.

14. Luftfahrzeug nach Anspruch 13,
**dadurch gekennzeichnet, dass** das Luftfahrzeug (1) ein elektrisches Niederspannungsnetz (90) mit mindestens einer elektrischen Niederspannungsenergiequelle (91) aufweist, wobei das elektrische Niederspannungsnetz (90) einen elektrischen Umrichter (96) aufweist, der mit der mindestens einen elektrischen Hochspannungs-Gleichstrombatterie (86) verbunden ist.

## Claims

1. Aircraft (1) provided with a rotary wing (3) and a power plant (5), said power plant (5) comprising a power transmission gearbox (10) provided with a main output shaft (19) rotating said rotary wing (3), said power plant (5) comprising at least one combustion engine (6) connected by a mechanical input connection (25) to an input shaft (11) of said power transmission gearbox (10), said aircraft (1) comprising at least one accessory (33) which is set in motion by a secondary output shaft (20) of the power transmission gearbox (10), said aircraft (1) comprising an assistance system (40) provided with a mechanical connection module (41) having a connection shaft (42) which is connected to the secondary output shaft (20),
wherein said assistance system (40) comprises a motor apparatus (101) which houses an electric motor (75), said mechanical connection module (41) comprising a casing (102) in which the connection shaft (42) as well as a first mechanical connection (45) and a second connection member (49) are at least partially located, said casing (102) being attached to the power transmission gearbox (10), said at least one accessory (33) being attached to said casing (102), said motor apparatus (101) being attached to said casing (102), said assistance system (40) comprising a first connection member (48) connected to said at least one accessory (33) and connected, by said first mechanical connection (45) inside said said casing (102), to the connection shaft (42), said mechanical connection module (41) comprising said second connection member (49) connected to said electric motor (75) and connected, by a second mechanical connection (50) inside said casing (102), to the connection shaft (42),
and wherein said electric motor (75) is an irreversible motor operating only in motor mode, said electric motor (75) being requested to set said main output shaft (19) in motion in the event of a failure of at least one combustion engine (6) via the mechanical connection module (41).

2. Aircraft according to claim 1,
**characterised in that** said at least one accessory (33) is selected from the group comprising hydraulic pumps, mechanical fans, electric generators and pneumatic compressors.

3. Aircraft according to claim 2,
**characterised in that** said at least one accessory (33) comprises a first hydraulic pump (33'), said first hydraulic pump (33') belonging to a hydraulic circuit (32) of said aircraft (1), said hydraulic circuit (32) being connected to a plurality of servo-controls for controlling a pitch of the blades (4) of the rotary wing (3).

4. Aircraft according to claim 3,
**characterised in that** said hydraulic circuit (32) comprises a second hydraulic pump (36) which is set in motion by the power transmission gearbox (10), said first mechanical connection (45) comprises a decoupling system (83) which is configured to decouple the first hydraulic pump (33') from the connection shaft (42) in the event of a failure of a combustion engine (6).

5. Aircraft according to any of claims 1 to 4,
**characterised in that** said second mechanical connection (50) comprises a freewheel (55) which is configured to transmit mechanical power only from the electric motor (75) to the connection shaft (42).

6. Aircraft according to any of claims 1 to 5,
**characterised in that** said assistance system (40) comprises a monitoring computer (85) connected to the electric motor (75) and to a sensor (80) allowing a failure of a combustion engine to be detected, the monitoring computer (85) being configured to request the operation of the electric motor (75) in the event of a so-called failure of a combustion engine being detected.

7. Aircraft according to claim 6,
**characterised in that** said sensor (80) comprises a rotational speed sensor (81, 82) which transmits a signal that varies on the basis of the rotational speed of the connection shaft (42).

8. Aircraft according to claim 7,
**characterised in that** the rotational speed sensor comprises a phonic wheel (81) which is rotatably secured to the connection shaft (42) and an inductive sensor (82) which is arranged opposite the phonic wheel (81).

9. Aircraft according to any of claims 1 to 8,
**characterised in that** said second mechanical connection (50) comprises at least one speed reduction gear stage (51, 61).

10. Aircraft according to any of claims 1 to 9,
**characterised in that** said first mechanical connection (45) comprises a coupling member (47) allowing a misalignment.

11. Aircraft according to any of claims 1 to 10,
**characterised in that** said first connection member (48) comprises connection splines (481) which interlock with receiving splines (35) of said at least one accessory (33).

12. Aircraft according to any of claims 1 to 11,
**characterised in that** said second connection member (49) comprises connection splines (491) which interlock with drive splines (77) of the electric motor (75).

13. Aircraft according to any of claims 1 to 12,
**characterised in that** said assistance system (40) comprises at least one high-voltage DC electric battery (86) which is electrically connected to the electric motor (75).

14. Aircraft according to claim 13,
**characterised in that** said aircraft (1) comprises a low-voltage electrical network (90) comprising at least one source of low-voltage electrical energy (91), said low-voltage electrical network (90) having an electrical converter (96) connected to said at least one high-voltage DC electric battery (86).
